(19) Europäisches Patentamt / European Patent Office / Office européen des brevets

(11) **EP 3 706 020 A1**

(12) **DEMANDE DE BREVET EUROPEEN**

(43) Date de publication:
**09.09.2020   Bulletin 2020/37**

(51) Int Cl.:
*G06F 21/32* (2013.01)          *G06F 21/64* (2013.01)
*H04L 9/32* (2006.01)          *H04L 29/06* (2006.01)

(21) Numéro de dépôt: **20161471.6**

(22) Date de dépôt: **06.03.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité:  **07.03.2019   FR 1902329**

(71) Demandeur: **Informatique 65800**
**44700 Orvault (FR)**

(72) Inventeur: **HÉMEURY, Vincent**
**44700 ORVAULT (FR)**

(74) Mandataire: **Lavoix**
**2, place d'Estienne d'Orves**
**75441 Paris Cedex 09 (FR)**

(54)   **CALCUL DE SIGNATURE ET VÉRIFICATION D'INTÉGRITÉ DE DONNÉES NUMÉRIQUES**

(57)   L'invention concerne le calcul de signature et la vérification d'intégrité de données numériques. Le système de calcul de signature d'au moins un bloc de données numériques formant un document numérique, permettant d'en vérifier l'intégrité, le document numérique faisant partie d'une série de documents numériques traités successivement, comporte au moins un système informatique (2) comportant un processeur (4) de calcul, et comporte ou est connecté à une mémoire électronique (8) adaptée à mémoriser une base de données maître (10). Pour un document numérique (12), le processeur (4) est configuré pour :

-obtenir une ou plusieurs métadonnées ($M_1$,...,$M_k$) associées au document numérique, et calculer au moins une valeur de hachage associée ;
-calculer une valeur de hachage d'au moins une partie des données numériques à protéger ;
-calculer une signature (Sign(n)) du document numérique en fonction de la ou des valeur(s) de hachage associée(s) aux métadonnées et de la valeur de hachage des données numériques à protéger, et
- enregistrer la signature (Sign(n)) du document numérique, avec un numéro d'enregistrement associé, dans la base de données maître (10).

FIG.1

EP 3 706 020 A1

**Description**

La présente invention concerne un procédé et un système de calcul de signature d'au moins un bloc de données numériques formant un document numérique comprenant des données numériques, cryptées ou non, à protéger et/ou à certifier. Elle concerne également un procédé et un système de vérification d'intégrité d'au moins un bloc de données numériques formant un document numérique contenant des données numériques, à partir d'une signature ainsi calculée.

L'invention se situe dans le domaine de la vérification à valeur probante de l'intégrité de données numériques. Elle trouve une application particulière dans des systèmes de vérification à valeur probante adaptés à traiter un grand volume de données, par exemple en temps réel.

La vérification de l'intégrité des données numériques, par exemple mémorisées dans des fichiers, est d'importance majeure dans de très nombreux domaines d'application, en particulier lorsque les données numériques sont susceptibles d'être mémorisées dans des dispositifs de stockage électroniques faisant partie de réseaux de communication. Il est possible que des tiers malveillants accèdent à des données numériques mémorisées et les altèrent à distance, par diverses techniques connues sous le nom de techniques de « piratage ».

Dans certains domaines applicatifs, par exemple dans le domaine bancaire, ou le domaine comptable ou le stockage de documents juridiques, il est critique d'être en mesure d'attester l'intégrité des données numériques, c'est-à-dire d'attester que les données auxquelles on accède à un instant ultérieur sont identiques aux données enregistrées préalablement, ou de certifier des évènements associés aux données.

En plus de la problématique de la vérification de l'intégrité des données elles-mêmes, se pose également le problème du traitement de grands volumes de données numériques stockées sur des serveurs et auxquelles il est nécessaire d'accéder avec une fréquence élevée, voire en temps réel.

À ces contraintes, s'ajoutent celles d'une possible mise en conformité, a posteriori, avec des règlements qui peuvent imposer une modification des données originelles (voire leur suppression, selon des dispositions réglementaires de protection de données personnelles par exemple) ou du maintien d'une valeur probante de données cryptées dont les algorithmes ont été cassés.

Diverses méthodes de validation de l'intégrité des données numériques ont été proposées.

On connaît notamment des méthodes mettant en œuvre des chaînes de hachage de données numériques, stockées sous forme de documents numériques, sur un même serveur. Dans de telles méthodes, on calcule une signature de document numérique en appliquant une fonction cryptographique, ou fonction de hachage, dépendant à la fois des données numériques du document numérique à traiter et d'une chaîne des signatures de documents numériques précédemment traités et mémorisés sur le serveur. Dans ce cas, les signatures des documents numériques sont imbriquées, ce qui rend le piratage difficile. Les signatures étant imbriquées, l'absence accidentelle ou la modification d'une seule signature de la chaîne rendrait la vérification d'authenticité impossible.

De plus, un tel système nécessite un stockage entièrement centralisé des signatures, et la vérification de l'intégrité ne peut être effectuée que par le système centralisé qui maîtrise le stockage centralisé. Or la gestion des systèmes centralisés est lourde, et n'est pas adaptée à certains domaines d'application.

L'invention a pour objectif de remédier aux inconvénients de l'état de la technique.

À cet effet, l'invention propose, selon un aspect, un procédé de calcul de signature d'au moins un bloc de données numériques formant un document numérique contenant des données numériques à protéger, permettant d'en vérifier l'intégrité, le document numérique faisant partie d'une série de documents numériques traités successivement. Ce procédé comporte, pour un document numérique, des étapes de :

- obtention d'une ou plusieurs métadonnées associées au document numérique, et calcul d'au moins une valeur de hachage associée ;
- obtention d'une valeur de hachage d'au moins une partie des données numériques à protéger;
- calcul d'une signature du document numérique en fonction de la ou des valeur(s) de hachage associée(s) aux métadonnées et de la valeur de hachage des données numériques à protéger, et
- enregistrement de la signature du document numérique, avec un numéro d'enregistrement associé, dans une base de données maître adaptée à mémoriser séquentiellement les signatures de documents traités successivement.

Avantageusement, le procédé de calcul de signature d'au moins un bloc de données numériques formant un document numérique proposé met en œuvre une signature composée de plusieurs éléments, respectivement une ou plusieurs valeurs de hachage de métadonnées associées au document, et une valeur de hachage obtenue à partir d'au moins une partie des données numériques à protéger. Avantageusement, ces éléments composant la signature peuvent être distribués à ou répartis entre plusieurs tiers, ce qui permet par la suite d'effectuer une vérification d'intégrité de signatures de manière distribuée, et donc d'augmenter la sécurité de vérification de l'intégrité des données. Ainsi, une vérification d'intégrité à valeur probante est obtenue.

Le procédé de calcul de signature d'au moins bloc d'un document numérique selon l'invention peut présenter une ou plusieurs des caractéristiques ci-dessous, prises indépendamment ou selon toutes les combinaisons acceptables :

Le calcul de signature est effectué également en fonction d'au moins une signature d'un document numérique précédemment traité.

Le procédé comporte un calcul d'une valeur de hachage pour chaque métadonnée associée au document numérique.

Le procédé comporte une concaténation des métadonnées associées au document numérique dans un ordre prédéterminé, et un calcul de valeur de hachage unique à partir des ladite concaténation.

Le calcul d'une signature comprend une concaténation de la ou des valeurs de hachage des métadonnées et de la valeur de hachage des données numériques, puis l'application d'une fonction de hachage.

Le procédé comporte en outre une communication de la signature du document numérique calculée et/ou d'au moins une des métadonnées associées au document numérique et/ou d'au moins une valeur de hachage des métadonnées à au moins un système informatique tiers.

Le procédé, comporte, préalablement au calcul d'une signature du document numérique, un verrouillage d'écriture dans la base de données maître, et un déverrouillage postérieurement à l'enregistrement de la signature du document numérique dans la base de données maître.

Les métadonnées comportent au moins un évènement de création, modification ou consultation du document numérique, le procédé comportant en outre, pour chaque événement, un calcul de signature de l'événement lié audit document numérique en fonction d'une valeur de hachage dudit événement, et une transmission de la signature de l'événement à un système informatique tiers.

Le procédé comporte en outre une obtention d'un premier numéro d'enregistrement associé audit document numérique crypté selon un premier algorithme de cryptage, une obtention d'une première signature enregistrée avec ledit premier numéro d'enregistrement, un calcul d'une deuxième signature dudit document numérique crypté selon un deuxième algorithme de cryptage, et un enregistrement dans la base de données maître de ladite deuxième signature, en association avec un deuxième numéro d'enregistrement et en association avec ledit premier numéro d'enregistrement.

Selon un autre aspect, l'invention concerne un procédé de vérification d'intégrité d'au moins un bloc de données numériques formant un document numérique contenant des données numériques, le document numérique faisant partie d'une série de documents numériques traités successivement. Ce procédé comporte, pour un document numérique, des étapes de :

- obtention d'un numéro d'enregistrement associé à un enregistrement d'une signature préalablement enregistrée dudit document numérique;
- obtention d'une ou plusieurs métadonnées associées au document numérique, et calcul d'au moins une valeur de hachage associée ;
- obtention d'une valeur de hachage d'au moins une partie des données numériques dudit document numérique,
- calcul d'une signature du document numérique en fonction de la ou des valeur(s) de hachage associée(s) aux métadonnées et de la valeur de hachage des données numériques à protéger,
- obtention de la signature préalablement enregistrée dudit document numérique,
- comparaison de la signature préalablement enregistrée à la signature calculée, et validation d'intégrité dudit document numérique si lesdites signatures sont égales.

Avantageusement, la vérification intégrité est une vérification à valeur probante.

Selon un mode de réalisation, le procédé de vérification d'intégrité comporte en outre des étapes de:

- obtention d'un évènement ou d'une valeur de hachage d'un évènement associé audit document numérique ;
- calcul d'une signature dudit événement ;
- obtention d'un système informatique tiers d'une signature d'événement associé au document numérique préalablement transmise ;
- comparaison de la signature d'événement calculée avec la signature d'événement obtenue, et en cas d'égalité, certification numérique dudit évènement associé au document numérique.

Selon un autre aspect, l'invention concerne un système de calcul de signature d'au moins un bloc de données numériques formant un document numérique comportant des données numériques à protéger, permettant d'en vérifier l'intégrité, le document numérique faisant partie d'une série de documents numériques traités successivement. Ce système de calcul de signature comporte au moins un système informatique comportant un processeur de calcul, et comporte ou est connecté à une mémoire électronique adaptée à mémoriser une base de données maître, le processeur de calcul étant configuré pour, pour un document numérique :

- obtenir une ou plusieurs métadonnées associées au document numérique, et calculer au moins une valeur de hachage associée ;
- obtenir une valeur de hachage d'au moins une partie des données numériques à protéger;
- calculer une signature du document numérique en fonction de la ou des valeur(s) de hachage associée(s) aux métadonnées et de la valeur de hachage des données numériques à protéger, et
- enregistrer la signature du document numérique, avec un numéro d'enregistrement associé, dans la base de données maître adaptée à mémoriser séquentiellement les signatures de documents traités successivement.

Le système de calcul de signature d'au moins un bloc de données numériques formant un document numérique est configuré pour mettre en œuvre un procédé de de signature d'au moins un bloc de données numériques formant un document numérique tel que brièvement décrit ci-dessus.

Selon un autre aspect, l'invention concerne un système de vérification d'intégrité d'au moins un bloc de données numériques formant un document numérique, le document numérique faisant partie d'une série de documents numériques traités successivement. Ce système de vérification d'intégrité comporte au moins un système informatique comportant un processeur de calcul configuré, pour un document numérique comportant des données numériques, pour:

- obtenir un numéro d'enregistrement associé à un enregistrement d'une signature préalablement enregistrée dudit document numérique;
- obtenir une ou plusieurs métadonnées associées au document numérique, et calculer au moins une valeur de hachage associée ;
- obtenir une valeur de hachage d'au moins une partie des données numériques dudit document numérique,
- calculer une signature du document numérique en fonction de la ou des valeur(s) de hachage associée(s) aux métadonnées et de la valeur de hachage des données numériques à protéger,
- obtenir la signature préalablement enregistrée dudit document numérique,
- comparer la signature préalablement enregistrée à la signature calculée, et valider l'intégrité dudit document numérique si lesdites signatures sont égales.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 illustre schématiquement un système de calcul de signature de documents numériques selon un mode de réalisation de l'invention ;
[Fig 2] la figure 2 illustre schématiquement un système de vérification d'intégrité de documents numériques selon un mode de réalisation de l'invention ;
[Fig 3] la figure 3 est un synoptique des principales étapes d'un procédé de calcul de signature de documents numériques selon un premier mode de réalisation de l'invention ;
[Fig 4] la figure 4 est un synoptique des principales étapes d'un procédé de vérification d'intégrité de documents numériques selon un mode de réalisation de l'invention ;
[Fig 5] la figure 5 est un synoptique des principales étapes d'un procédé de calcul de signature de documents numériques selon un deuxième mode de réalisation de l'invention.

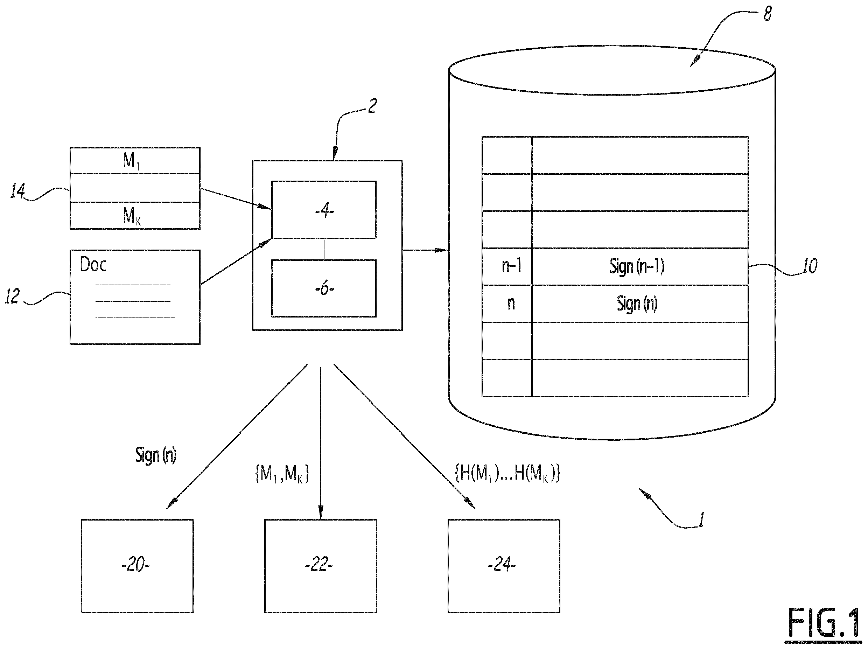

La figure 1 illustre schématiquement un système 1 mettant en œuvre un calcul de signature de données numériques à protéger, permettant par la suite d'en prouver l'intégrité.

Les données numériques à protéger sont par exemple mémorisées sous forme de documents numériques formatés sous forme de fichiers.

Dans un mode de réalisation, les données numériques à protéger sont des données bancaires ou comptables, mémorisées sous forme d'au moins un bloc de données.

On entend par bloc de données le plus petit élément qui va être manipulé par le système d'exploitation pour créer des fichiers, mais aussi par les réseaux pour faire transiter des informations ou par les algorithmes de hachage pour créer une signature.

Dans un mode de réalisation, le procédé peut opérer sur un ou plusieurs bloc(s) de données en mémoire qui vont transiter ensuite par un ou plusieurs réseaux avant stockage des données et des signatures dans une ou plusieurs bases de données, sans utilisation de fichiers.

Par la suite, on appellera document numérique un ensemble contenant au moins un bloc de données numériques à protéger, formaté selon un format prédéterminé, adapté à être mémorisé sur un support électronique non transitoire, lisible par ordinateur.

Le support lisible par ordinateur est par exemple un médium apte à mémoriser les instructions électroniques et à être couplé à un bus d'un système informatique. À titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le système 1 comporte un système informatique 2, par exemple un dispositif électronique de calcul tel qu'un ordinateur ou un dispositif électronique réalisé sous forme de composants logiques programmables, tel qu'un FPGA (de l'anglais *Field-Programmable Gate Array),* ou encore sous forme de circuits intégrés dédiés, de type ASIC (de l'anglais *Application-Specific Integrated Circuit).*

Le système informatique 2 comporte une unité centrale de calcul 4 comportant un ou plusieurs processeurs électroniques, apte à exécuter des instructions de programme informatique lorsque le système 2 est mis sous tension.

L'unité centrale de calcul 4 est en particulier adaptée à mettre en œuvre un procédé de calcul de signature de données numériques selon l'invention.

Le système informatique 2 comporte une unité de mémoire électronique 6 adaptée à stocker en particulier des instructions de code exécutable aptes à mettre en œuvre le procédé de calcul de signature selon l'invention. Les divers blocs fonctionnels du système informatique 2 sont connectés via un bus de communication.

De plus, le système informatique 2 comporte ou est connecté à une unité de mémoire électronique 8 adaptée à mémoriser une base de données 10 appelée base de données maître et comportant des signatures calculées, associées à des numéros d'enregistrement.

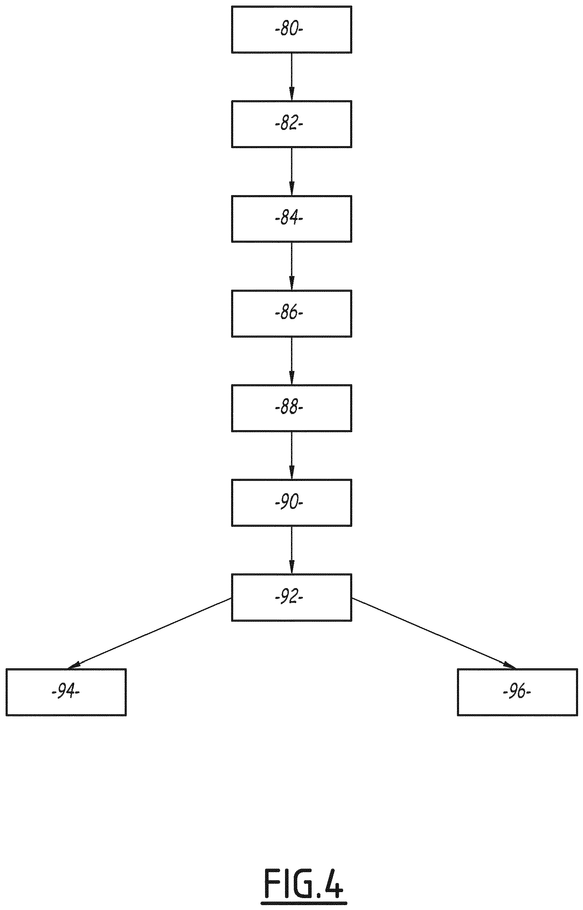

Lorsqu'un document numérique DOC, référence 12 sur la figure 1, contenant des données numériques à protéger est fourni au système informatique 2, le système informatique 2 met en œuvre un procédé de calcul de signature numérique tel que décrit en détail ci-après, notamment en référence à la figure 4. Le document numérique est par exemple généré ou mis à jour par une application logicielle adaptée à communiquer avec le système informatique 2, ou fourni par un client pour mémorisation et signature.

Le document numérique DOC est par ailleurs mémorisé dans le système informatique 2. En variante le document numérique DOC est mémorisé sur tout système de stockage et d'archivage de données, adapté à communiquer avec ou lisible par le système informatique 2.

Des métadonnées $M_1$ à $M_k$, référencées 14 sur la figure 1, associées au document numérique DOC, sont sélectionnées. Ces métadonnées comprennent par exemple un identifiant ID_DOC associé au document numérique, par exemple un numéro unique issu d'une base documentaire, un identifiant associé au propriétaire du document ID_Compte, une date de création du document Date_1, une date de mise à disponibilité du document Date_2.

Les métadonnées sont traitées par application d'une fonction cryptographique de hachage, avec ou sans salage, pour obtenir une ou plusieurs valeurs de hachage des métadonnées.

De préférence, plusieurs valeurs de hachage des métadonnées sont obtenues.

De manière connue, une fonction de hachage est une fonction cryptographique qui est non-inversible. Une fonction de hachage est dite parfaite si elle réalise une injection d'un premier ensemble, qui est l'ensemble des valeurs initiales vers un deuxième ensemble qui est l'ensemble des valeurs finales. Une fonction de hachage est dite minimale si elle est parfaite et si le cardinal du premier ensemble est égal au cardinal du deuxième ensemble. Dans ce cas, toutes les valeurs générées sont distinctes. Si le cardinal du deuxième ensemble est inférieur au cardinal du premier ensemble, il existe un risque de collisions (i.e. l'application de la fonction de hachage à deux valeurs différentes du premier ensemble aboutit à une même valeur du deuxième ensemble).

De manière connue, le salage cryptographique consiste à renforcer la sécurité en ajoutant des données pseudo-aléatoires aux données sur lesquelles s'applique la fonction de hachage. En particulier, le salage rend la création de documents (ou de blocs de données) différents mais avec des valeurs de hachage différentes plus difficile, car « l'attaquant » n'a plus la maîtrise des données initiales.

De plus, une fonction cryptographique de hachage est appliquée à au moins une partie des données numériques à protéger extraites du document DOC, permettant d'obtenir une valeur de hachage des données.

Enfin, optionnellement, une signature de document numérique précédemment signé est obtenue de la base de données maître. La signature d'un document numérique est elle-même une valeur numérique. Si le document numérique DOC est le N-ième document à traiter, on note Sign(N) sa signature, la signature d'un document numérique précédent est par exemple Sign(N-1), et plus généralement Sign(N-p), p étant un entier compris entre 1 et N.

Une signature du document DOC, notée Sign(N), est alors calculée en fonction des valeurs de hachage des métadonnées, de la valeur de hachage des données et, optionnellement, d'une ou plusieurs signatures numériques précédemment calculées et mémorisées. La signature du document numérique DOC est enregistrée dans la base de données maître 10, l'enregistrement ayant un identifiant N associé, qui est par exemple un numéro d'enregistrement.

De préférence, le numéro d'enregistrement est incrémenté à chaque nouvel enregistrement dans la base de données maître.

De plus, il est prévu de communiquer une ou plusieurs des données contribuant à la génération de la signature du document numérique DOC à un ou plusieurs systèmes informatiques tiers 20, 22, 24, de manière à réaliser un stockage distribué et redondant.

De préférence, les systèmes informatiques tiers 20, 22, 24 sont gérés par des organismes dits « de confiance ».

De manière connue, un « tiers de confiance » est un organisme chargé de gérer pour le compte d'autrui les conventions secrètes de moyens ou de prestations de cryptologie, en respectant la réglementation, les normes et les labels en vigueur.

Dans un mode de réalisation, les systèmes informatiques tiers 20, 22, 24 sont distants, et les données sont transmises par des moyens de télécommunication.

Par exemple, la signature du document numérique DOC est transmise à un système informatique tiers 20, une ou plusieurs des métadonnées $M_1$ à $M_k$ sont transmises à un système informatique tiers 22, et une ou plusieurs des valeurs de hachage des métadonnées sont transmises à un système informatique tiers 24.

Chacun des systèmes informatiques 20, 22, 24 est adapté à mémoriser les données reçues, en relation avec un identifiant du document DOC, par exemple en relation avec le numéro d'enregistrement du document DOC.

Ainsi, avantageusement, les données sont mémorisées sous forme répartie par plusieurs systèmes informatiques tiers. De plus, aucun des systèmes informatiques tiers ne détient la totalité des informations permettant de recalculer la signature du document numérique DOC.

Bien entendu, il s'agit d'un exemple, le nombre de systèmes informatiques tiers auxquels sont transmises les données pouvant être quelconque. Par exemple, dans un mode de réalisation, des copies redondantes sont mémorisées dans plusieurs systèmes informatiques tiers.

Selon une autre variante, un seul système informatique tiers mémorise la totalité des métadonnées et des valeurs de hachage associées.

Selon une autre variante, au moins une métadonnée n'est pas mémorisée mais est fournie par le client lors de la mise en œuvre de la vérification d'intégrité.

Avantageusement, la vérification d'intégrité des données numériques du document numérique peut être alors effectuée par un système de vérification différent du système 2 de calcul de signature qui maintient la base de données maître 10.

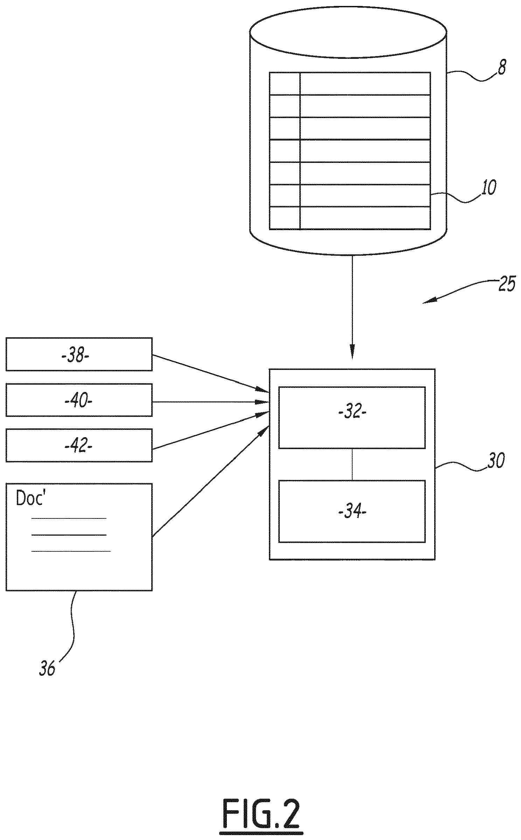

La figure 2 illustre schématiquement un mode de réalisation d'un système 25 de vérification d'intégrité de document numérique selon l'invention.

Le système de vérification d'intégrité 25 comporte un système informatique 30, par exemple un dispositif électronique de calcul tel qu'un ordinateur ou un dispositif électronique réalisé sous forme de composants logiques programmables, tel qu'un FPGA (de l'anglais *Field-Programmable Gate Array*), ou encore sous forme de circuits intégrés dédiés, de type ASIC (de l'anglais *Application-Specific Integrated Circuit*).

Le système informatique 30 comporte une unité centrale de calcul 32 comportant un ou plusieurs processeurs électroniques, apte à exécuter des instructions de programme informatique lorsque le système 30 est mis sous tension.

L'unité centrale de calcul 32 est en particulier adaptée à mettre en œuvre un procédé de vérification d'intégrité de données numériques selon l'invention.

Le système informatique 30 comporte à une unité de mémoire électronique 34 adaptée à stocker des données numériques, en particulier des instructions de code exécutable aptes à mettre en œuvre le procédé de vérification d'intégrité selon l'invention. Les divers blocs fonctionnels du système informatique 30 sont connectés via un bus de communication.

Le système de vérification d'intégrité 25 est, dans un mode de réalisation, le même que le système 2 de calcul de signature de document numérique.

Selon une variante, le système de vérification d'intégrité est différent du système de calcul de signature, il s'agit par exemple d'un système mis en œuvre par un tiers de confiance distinct de l'organisme qui génère les signatures.

Pour effectuer la vérification d'intégrité des documents numériques signés par un système de calcul de signature tel que décrit ci-dessus, le système informatique 30 reçoit un document numérique DOC', référence 36, comportant des données numériques, ainsi que des valeurs de métadonnées ou des valeurs de hachage de métadonnées 38, 40, 42.

Le système informatique 30 obtient également un numéro d'enregistrement de la signature du document DOC' préalablement calculée et mémorisée pour le document numérique DOC', ainsi que, optionnellement, une signature de document numérique précédemment signé est obtenue de la base de données maître, utilisée par l'algorithme de calcul de signature.

De préférence, les divers éléments formant la signature sont reçus de plusieurs tiers, ce qui permet de diminuer le risque de piratage d'une signature.

Par exemple, un client, utilisateur ou application, transmet un numéro d'enregistrement N de la signature de ce document dans la base de données maître, et le document numérique DOC' dont il cherche à vérifier l'intégrité.

Le système informatique 30 alors fait une requête à la base de données maître pour obtenir la signature Sign(N) de document enregistrée avec le numéro d'enregistrement N et, optionnellement, une signature Sign(N') de document numérique précédemment signé, par exemple enregistrée avec le numéro d'enregistrement N'=N-p, où p est un entier positif non nul inférieur ou égal à N.

Le système informatique 30 met alors en œuvre le même algorithme de calcul de signature que celui appliqué lors du calcul de signature d'un document, et obtient une signature Sign(N)*, qui est comparée à Sign(N) extraite de la base de données maître : en cas d'égalité entre ces deux signatures, l'intégrité du document numérique DOC' est validée. En d'autres termes, cela permet de valider le fait que les données numériques du document DOC' n'ont pas été modifiées depuis le calcul et l'enregistrement de la signature de ce document dans la base de données maître.

En cas de comparaison négative (inégalité entre les deux signatures), l'intégrité des données n'est pas validée : au moins une donnée numérique du document DOC' a été modifiée depuis le calcul et l'enregistrement de la signature de ce document dans la base de données maître.

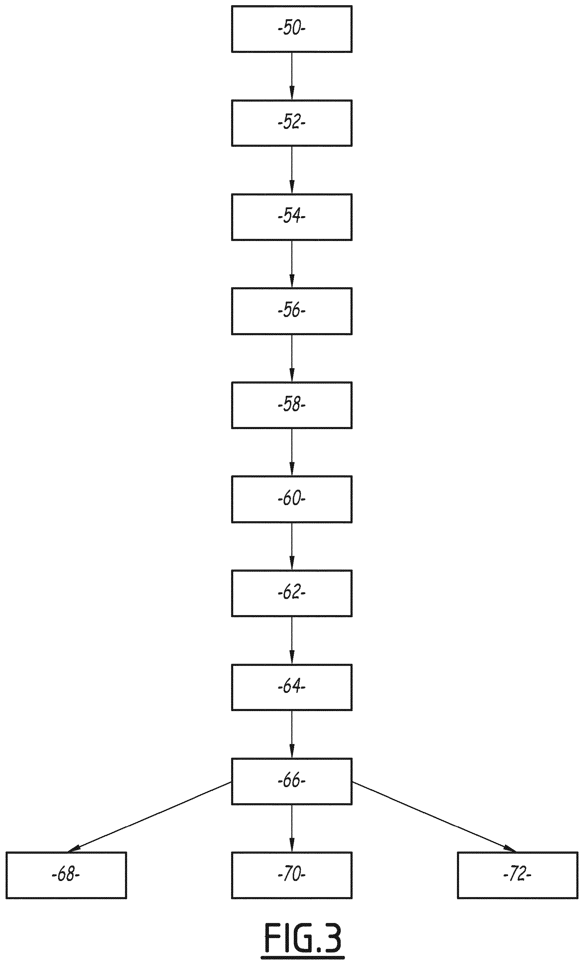

La figure 3 est un synoptique des principales étapes d'un procédé de calcul de signature de documents numériques selon un premier mode de réalisation de l'invention.

Un document numérique à traiter, $DOC_n$, est fourni en entrée du procédé. Le document numérique $DOC_n$ comprend notamment des données numériques à protéger.

Il est par exemple présenté dans un format de fichier prédéterminé.

Suite à la réception du document à traiter (étape 50), le système de calcul de signature met en œuvre une étape 52 d'obtention et de configuration de métadonnées associées au document $DOC_n$ qui comprennent par exemple : un identifiant unique du document ID-$DOC_n$, un identifiant associé au propriétaire du document ID_Compte, une date de création du document Date_1, une date de mise à disponibilité du document Date_2.

Dans une application bancaire ou comptable, les métadonnées comprennent par exemple un numéro de compte, un identifiant de propriétaire du compte.

Le type et le nombre de métadonnées à prendre en compte sont prédéfinis, ainsi que l'ordre dans lequel ces métadonnées sont utilisées. Les métadonnées extraites sont par la suite référencées $M_1$ à $M_K$.

De préférence, les métadonnées utilisées pour le calcul de la signature sont mises dans un format indépendant du format de fichier dans lequel est représenté le document numérique à traiter. De préférence, les champs d'enregistrement des métadonnées sont de taille prédéterminée. Par exemple, une date est formatée selon un format définissant l'année, le mois, le jour, l'heure, la minute et la seconde.

Ensuite, une étape 54 de hachage des métadonnées consistant à calculer une ou plusieurs valeurs de hachage à partir des métadonnées est mise en œuvre.

Par exemple, dans un mode de réalisation, les métadonnées sont concaténées dans un ordre de concaténation prédéterminé, par exemple dans l'ordre croissant des indices associés, et une fonction cryptographique de hachage est appliquée.

Toute fonction de hachage connue peut être appliquée, par exemple parmi les algorithmes de hachage suivants : MD5, SHA-1, SHA-2, SHA-3, SHA-256, SHA-384 ou SHA-512. La longueur du résultat de la fonction de hachage varie en fonction de l'algorithme de hachage utilisé, et peut atteindre 128 caractères pour l'algorithme SHA-512.

Selon une variante, une fonction de hachage est appliquée à chaque métadonnée, et on obtient autant de valeurs de hachage de métadonnées qu'il y a de métadonnées, c'est-à-dire K valeurs de hachage de métadonnées dans l'exemple.

Selon une autre variante, les métadonnées sont regroupées en un nombre prédéterminé de sous-ensembles, les métadonnées de chaque sous-ensemble sont concaténées dans un ordre prédéterminé et une fonction de hachage est appliquée pour chaque sous-ensemble. On obtient alors un nombre P de valeurs de hachage de métadonnées, P étant le nombre de sous-ensembles compris entre 1 et K.

Les valeurs de hachage des métadonnées sont notées $H_1$ à $H_P$.

Dans une variante, le hachage est réalisé avec salage cryptographique pour renforcer la sécurité.

À l'étape 56 de hachage des données, au moins une partie des données numériques du document numériques $DOC_n$ est extraite, et une fonction cryptographique de hachage est appliquée à cette partie des données.

Dans un mode de réalisation, la fonction de hachage est appliquée à toutes les données numériques du document numérique $DOC_n$.

Dans un mode de réalisation, les données numériques sont dans un format prédéterminé, par exemple codées sur des octets.

Dans une variante, les données numériques sont cryptées avec un algorithme de cryptage prédéterminé, et la fonction de hachage est appliquée sur les données cryptées.

La fonction cryptographique de hachage peut être la même que celle appliquée à l'étape 52, ou différente. Une valeur de hachage des données du document numérique est obtenue. Dans une variante, le hachage est réalisé avec salage cryptographique pour renforcer la sécurité.

Les étapes 54 et 56 peuvent être effectuées dans l'ordre inverse ou simultanément si les processeurs de calcul le permettent.

Ensuite, la base de données maître est verrouillée à l'étape de verrouillage 58, c'est-à-dire que l'écriture des données dans la base de données maître est réservée au processus courant.

Le verrouillage permet de séquencer l'enregistrement d'une série de documents numériques traités successivement et d'associer des numéros d'enregistrement dans l'ordre de traitement des documents.

À l'étape 60, qui est optionnelle, une signature de document numérique préalable est obtenue. Par exemple, si le document à traiter DOC$_n$ est le n-ième document traité, donc le numéro d'enregistrement de sa signature dans la base de données maître sera le numéro « n », à l'étape 60 une signature Sign(n-q) de document DOC$_{n-q}$ est extraite, q étant un entier compris entre 1 et n.

Par exemple, c'est la dernière signature enregistrée, Sign(n-1), qui est extraite et utilisée.

La signature du document DOC$_n$ est ensuite calculée lors d'une étape de calcul 62, à partir de la valeur de hachage des données du document numérique, de la ou des valeurs de hachage des métadonnées et de la signature Sign(n-1).

Dans un mode de réalisation, ces valeurs sont concaténées dans un ordre prédéterminé, et une fonction cryptographique de hachage, avec ou sans salage, notée Hash(), est appliquée :

$$Sign(n) = Hash(H_1, \dots, H_P, H(data), Sign(n-1))$$

La signature du document numérique DOC$_n$ est enregistrée (étape d'enregistrement 64) dans la base de données maître, par exemple dans un tableau, et est associée son numéro d'enregistrement.

Dans un mode de réalisation, le tableau d'enregistrement est multidimensionnel, et au moins un sous-ensemble des valeurs de hachage y est également enregistré en association avec le numéro d'enregistrement de DOC$_n$.

La base de données maître est déverrouillée à l'étape de déverrouillage 66, qui est suivie des étapes optionnelles d'envoi 68 de la signature du document numérique DOC$_n$ à un ou plusieurs tiers, 70 d'envoi des métadonnées ou des valeurs de hachage des métadonnées à un ou plusieurs tiers et 72 d'affichage de la signature calculée à destination d'un utilisateur.

La figure 4 est un synoptique des principales étapes d'un procédé de vérification d'intégrité de documents numériques selon un mode de réalisation de l'invention.

Ce procédé comporte une première étape 80 de connexion d'un client au système de vérification. Le client peut être un utilisateur ou une application utilisatrice.

Un identifiant de la signature à vérifier, par exemple son numéro d'enregistrement dans la base de données maître, est fourni par le client lors d'une étape 82 d'indication de la signature à vérifier.

En variante, c'est la signature du document numérique dont l'intégrité est à vérifier qui est fournie par le client à l'étape 82, et le numéro d'enregistrement correspondant est obtenu à partir de la signature.

Le système vérifie, lors d'une étape de vérification 84, l'existence d'un enregistrement correspondant dans la base de données maître, ou chez un tiers de confiance effectuant un enregistrement des signatures. La signature du document numérique, ainsi que, optionnellement, une signature de document numérique préalable sont obtenues à l'étape 84.

Le document numérique ou les données numériques du document correspondant sont obtenues à l'étape 86, et les métadonnées ou les valeurs de hachage des métadonnées sont obtenues à l'étape d'obtention de métadonnées 88.

Dans un mode de réalisation, les données numériques et les métadonnées, ou une partie de ces métadonnées, sont fournies par le client, et les valeurs de hachage sont calculées de manière analogue au calcul effectué à l'étape 54 de la figure 3.

En variante, le document numérique est obtenu à partir d'une base de données de stockage, et au moins une partie des métadonnées est obtenue à partir de tiers de confiance, les métadonnées ayant été enregistrées en association avec le numéro d'enregistrement de la signature ou un autre identifiant du document.

Ainsi, avantageusement, le système de vérification n'a pas besoin de stocker toutes les données utilisées pour la vérification.

À l'étape 90 de re-calcul de signature le système met en œuvre un calcul de signature à partir des données obtenues dans les étapes 84, 86, 88, sur la base de l'algorithme de calcul de signature : les valeurs de hachage, avec ou sans salage et en utilisant les mêmes fonctions cryptographiques qu'à la génération de signature sont appliquées, et le calcul de signature décrit ci-dessus en référence à l'étape de calcul 62 est appliqué.

La signature de document obtenue est comparée à l'étape de comparaison 92 à la signature, extraite de la base de données maître ou obtenue d'un autre système tiers, et une validation (étape de validation d'intégrité 94) de l'intégrité des données numériques ou une invalidation de l'intégrité (étape 96) découle du résultat de la comparaison.

La validation a lieu lorsque la signature calculée à l'étape 90 est identique à celle extraite de la base de données maître ou obtenue d'un autre système tiers.

Diverses variantes de réalisation des procédés de calcul de signature et de vérification de l'intégrité des données sont envisageables.

Dans une des variantes, un lien est ajouté entre numéros d'enregistrement de signature correspondant à un même document numérique, mémorisé dans des formats différents, par exemple des formats de cryptage différents.

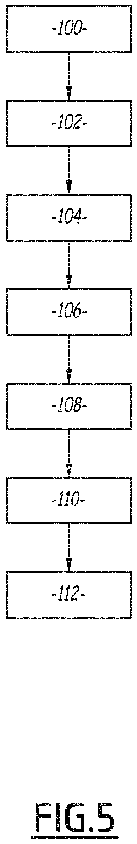

La figure 5 est un synoptique des principales étapes d'un procédé de calcul de signature de documents numériques selon un deuxième mode de réalisation de l'invention, dans lequel un document est mémorisé sous forme cryptée.

Avantageusement, ce mode de réalisation permet par la suite de vérifier l'intégrité des données numériques, même après mise en œuvre d'un nouvel algorithme de cryptage.

Le procédé comporte, dans ce mode de réalisation, une étape 100 d'obtention d'un premier numéro d'enregistrement $n_0$ et d'une première signature ou signature initiale, calculée pour le document numérique à traiter, le document numérique à traiter ayant été mémorisé en format crypté avec un premier algorithme de cryptage.

L'étape 100 est suivie d'une étape 102 d'application d'un deuxième algorithme de cryptage au document numérique qui est déjà crypté selon un premier algorithme de cryptage. Le résultat de ce deuxième cryptage est mémorisé à l'étape 104 en tant que document numérique à traiter.

Ensuite à l'étape 106 une fonction de hachage, avec ou sans salage, est appliquée au document numérique à traiter.

À l'étape 108, les métadonnées associées au document numérique pour calculer la signature initiale sont obtenues, par exemple en utilisant le premier numéro d'enregistrement $n_0$. La première valeur de signature enregistrée au numéro d'enregistrement $n_0$ est ajoutée aux métadonnées.

Une deuxième signature du document crypté avec le deuxième algorithme de cryptage est calculée à l'étape 110, le calcul étant basé sur les métadonnées extraites à l'étape 108 enrichies de la première signature et sur la valeur de hachage des données obtenue à l'étape 106. De préférence, le calcul d'une deuxième signature du document est analogue au calcul de signature décrit ci-dessus en référence à l'étape 62 de la figure 3.

La deuxième signature est mémorisée à l'étape de mémorisation 112 dans la base de données maître, et associée à un deuxième numéro d'enregistrement $n_1$. De plus, une association au premier numéro d'enregistrement $n_0$ est également mémorisée dans la base de données maître.

Par la suite, il n'est plus nécessaire de préserver le document crypté avec le premier algorithme de cryptage devenu obsolète, mais il faut conserver l'enregistrement des métadonnées associées à ce document crypté avec le premier algorithme de cryptage pour permettre la vérification complète, à savoir, que le document recrypté correspond bien au document initial crypté avec le premier algorithme de cryptage.

Par conséquent, le document crypté avec le premier algorithme de cryptage peut être effacé de la base de données. La validation de la deuxième signature du document initial en lien avec le premier numéro d'enregistrement permet de valider l'intégrité des données, en d'autres termes de prouver que le document crypté avec le deuxième algorithme de cryptage correspond au document initial crypté avec le premier algorithme de cryptage, ce qui donne au procédé la capacité d'évoluer avec l'état de l'art cryptographique et d'être insensible à la casse d'un algorithme utilisé lors d'une étape de réalisation.

Selon une variante, l'invention permet de vérifier et de certifier numériquement des évènements associés à un document numérique, tout en conservant le document numérique secret, donc sans avoir à accéder au contenu, c'est-à-dire aux données numériques, qui restent secrètes.

De tels évènements sont par exemple : la création du document, une modification du document, une consultation du document. Chaque évènement a une date associée. Plusieurs évènements de modification ou de consultation peuvent être enregistrés.

Les évènements sont considérés comme étant des métadonnées associées au document à traiter.

Dans une application bancaire ou comptable, d'autres métadonnées sont par exemple un numéro de compte ou un numéro d'utilisation.

Pour la certification numérique d'événements associés à un document numérique, sans accéder aux données numériques, les étapes suivantes sont envisagées :

- obtenir un numéro d'enregistrement associé à un enregistrement d'une signature associée au document numérique préalablement enregistrée de la chaîne de vérification;
- obtenir un numéro d'enregistrement et une valeur de hachage du document numérique sans accéder aux données numériques du document numérique;
- obtenir une ou plusieurs métadonnées associées au document numérique, lesdites métadonnées comprenant un évènement associé comprenant une date de création ou de modification ou de consultation dudit document, des numéros de compte ou un numéro d'utilisateur, et calculer au moins une valeur de hachage associée;
- stocker dans une base de données les métadonnées et leurs valeurs de hachage;
- calculer une signature de l'événement lié audit document en fonction des valeurs de hachage et des métadonnées, et transmettre la signature calculée à un tiers de confiance.

Lors de la vérification, la certification numérique d'événement associé au document numérique comprend :

- transmettre la valeur de hachage du document et les métadonnées du ou des évènement(s) à vérifier;

- calculer la signature du ou des événements, selon la même méthode de calcul de signature ;
- comparer les signatures avec celles enregistrées par le tiers de confiance, si elles existent, certifier le ou les évènements associés au document.

## Revendications

1. Procédé de calcul de signature d'au moins un bloc de données numériques formant un document numérique contenant des données numériques à protéger, permettant d'en vérifier l'intégrité, le document numérique (12) faisant partie d'une série de documents numériques traités successivement, **caractérisé en ce qu'**il comporte, pour un document numérique (12), des étapes de :

   - obtention (52) d'une ou plusieurs métadonnées ($M_1$,... ,$M_K$) associées au document numérique (12), et calcul (54) d'au moins une valeur de hachage associée ;
   - obtention (56) d'une valeur de hachage d'au moins une partie des données numériques à protéger;
   - calcul (62) d'une signature du document numérique en fonction de la ou des valeur(s) de hachage associée(s) aux métadonnées et de la valeur de hachage des données numériques à protéger, et
   - enregistrement (64) de la signature (Sign(n)) du document numérique, avec un numéro d'enregistrement associé, dans une base de données maître (10) adaptée à mémoriser séquentiellement les signatures de documents traités successivement.

2. Procédé selon la revendication 1, dans lequel le calcul (62) de signature est effectué également en fonction d'au moins une signature d'un document numérique précédemment traité.

3. Procédé selon l'une des revendications 1 ou 2, comportant un calcul (56) d'une valeur de hachage pour chaque métadonnée associée au document numérique.

4. Procédé selon l'une des revendications 1 ou 2, comportant une concaténation des métadonnées associées au document numérique dans un ordre prédéterminé, et un calcul de valeur de hachage unique à partir des ladite concaténation.

5. Procédé selon l'une quelconque des revendications 1 à 4, dans lequel le calcul d'une signature comprend une concaténation de la ou des valeurs de hachage des métadonnées et de la valeur de hachage des données numériques, puis l'application d'une fonction de hachage.

6. Procédé selon l'une quelconque des revendications 1 à 5, comportant en outre une communication (68, 70) de la signature du document numérique calculée et/ou d'au moins une des métadonnées associées au document numérique et/ou d'au moins une valeur de hachage des métadonnées à au moins un système informatique tiers (20, 22, 24).

7. Procédé selon l'une quelconque des revendications 1 à 6, comportant préalablement au calcul d'une signature du document numérique, un verrouillage (58) d'écriture dans la base de données maître, et un déverrouillage (66) postérieurement à l'enregistrement (64) de la signature du document numérique dans la base de données maître (10).

8. Procédé selon l'une quelconque des revendications 1 à 7, dans lequel lesdites métadonnées comportent au moins un évènement de création, modification ou consultation du document numérique, le procédé comportant en outre, pour chaque événement, un calcul de signature de l'événement lié audit document numérique en fonction d'une valeur de hachage dudit événement, et une transmission de la signature de l'événement à un système informatique tiers (20, 22, 24).

9. Procédé selon l'une quelconque des revendications 1 à 8, comportant en outre une obtention (100) d'un premier numéro d'enregistrement associé audit document numérique crypté selon un premier algorithme de cryptage, une obtention d'une première signature enregistrée avec ledit premier numéro d'enregistrement, un calcul (110) d'une deuxième signature dudit document numérique crypté selon un deuxième algorithme de cryptage, et un enregistrement (112) dans la base de données maître (10) de ladite deuxième signature, en association avec un deuxième numéro d'enregistrement et en association avec ledit premier numéro d'enregistrement.

10. Procédé de vérification d'intégrité d'au moins un bloc de données numériques formant un document numérique contenant des données numériques, le document numérique faisant partie d'une série de documents numériques traités successivement, **caractérisé en ce qu'**il comporte, pour un document numérique, des étapes de :

- obtention (82) d'un numéro d'enregistrement associé à un enregistrement d'une signature préalablement enregistrée dudit document numérique;
- obtention (88) d'une ou plusieurs métadonnées associées au document numérique, et calcul d'au moins une valeur de hachage associée ;
- obtention (88) d'une valeur de hachage d'au moins une partie des données numériques dudit document numérique,
- calcul (90) d'une signature du document numérique en fonction de la ou des valeur(s) de hachage associée(s) aux métadonnées et de la valeur de hachage des données numériques à protéger,
- obtention de la signature préalablement enregistrée dudit document numérique,
- comparaison (92) de la signature préalablement enregistrée à la signature calculée, et validation (94, 96) d'intégrité dudit document numérique si lesdites signatures sont égales.

11. Procédé de vérification d'intégrité selon la revendication 10, comportant en outre des étapes de:

- obtention d'un évènement ou d'une valeur de hachage d'un évènement associé audit document numérique ;
- calcul d'une signature dudit événement ;
- obtention d'un système informatique tiers d'une signature d'événement associé au document numérique préalablement transmise ;
- comparaison de la signature d'événement calculée avec la signature d'événement obtenue, et en cas d'égalité, certification numérique dudit évènement associé au document numérique.

12. Système de calcul de signature d'au moins un bloc de données numériques formant un document numérique comportant des données numériques à protéger, permettant d'en vérifier l'intégrité, le document numérique faisant partie d'une série de documents numériques traités successivement, **caractérisé en ce qu'**il comporte au moins un système informatique (2) comportant un processeur (4) de calcul, et comporte ou est connecté à une mémoire électronique (8) adaptée à mémoriser une base de données maître (10), le processeur (4) de calcul étant configuré pour, pour un document numérique (12) :

- obtenir une ou plusieurs métadonnées ($M_1,...,M_K$) associées au document numérique, et calculer au moins une valeur de hachage associée ;
- obtenir une valeur de hachage d'au moins une partie des données numériques à protéger;
- calculer une signature (Sign(n)) du document numérique en fonction de la ou des valeur(s) de hachage associée(s) aux métadonnées et de la valeur de hachage des données numériques à protéger, et
- enregistrer la signature (Sign(n)) du document numérique, avec un numéro d'enregistrement associé, dans la base de données maître (10) adaptée à mémoriser séquentiellement les signatures de documents traités successivement.

13. Système de vérification d'intégrité d'au moins un bloc de données numériques formant un document numérique, le document numérique faisant partie d'une série de documents numériques traités successivement, **caractérisé en ce qu'**il comporte au moins un système informatique (30) comportant un processeur de calcul (32) configuré, pour un document numérique comportant des données numériques, pour:

- obtenir un numéro d'enregistrement associé à un enregistrement d'une signature préalablement enregistrée dudit document numérique;
- obtenir une ou plusieurs métadonnées associées au document numérique, et calculer au moins une valeur de hachage associée ;
- obtenir une valeur de hachage d'au moins une partie des données numériques dudit document numérique,
- calculer une signature du document numérique en fonction de la ou des valeur(s) de hachage associée(s) aux métadonnées et de la valeur de hachage des données numériques à protéger,
- obtenir la signature préalablement enregistrée dudit document numérique,
- comparer la signature préalablement enregistrée à la signature calculée, et valider l'intégrité dudit document numérique si lesdites signatures sont égales.

14. Système de vérification d'intégrité selon la revendication 13, dans lequel le processeur de calcul est en outre configuré pour :

- obtenir un évènement ou d'une valeur de hachage d'un évènement associé audit document numérique ;
- calculer une signature dudit événement ;
- obtenir un système informatique tiers d'une signature d'événement associé au document numérique préalablement transmise ;
- comparer la signature d'événement calculée avec la signature d'événement obtenue, et en cas d'égalité, valider une certification dudit évènement associé au document numérique.

EP 3 706 020 A1

M₁

M_K

14

Doc

12

-2-

-4-

-6-

8

n-1    Sign (n-1)

n      Sign (n)

10

1

Sign (n)

{M₁,M_K}

{H(M₁)...H(M_K)}

-20-

-22-

-24-

<u>FIG.1</u>

-38-

-40-

-42-

Doc'

-32-

-34-

8

10

25

30

36

## FIG.2

```
        ┌──────────┐
        │   -50-   │
        └────┬─────┘
             │
             ▼
        ┌──────────┐
        │   -52-   │
        └────┬─────┘
             │
             ▼
        ┌──────────┐
        │   -54-   │
        └────┬─────┘
             │
             ▼
        ┌──────────┐
        │   -56-   │
        └────┬─────┘
             │
             ▼
        ┌──────────┐
        │   -58-   │
        └────┬─────┘
             │
             ▼
        ┌──────────┐
        │   -60-   │
        └────┬─────┘
             │
             ▼
        ┌──────────┐
        │   -62-   │
        └────┬─────┘
             │
             ▼
        ┌──────────┐
        │   -64-   │
        └────┬─────┘
             │
             ▼
        ┌──────────┐
   ┌────│   -66-   │────┐
   │    └────┬─────┘    │
   ▼         ▼          ▼
┌──────┐ ┌──────┐  ┌──────┐
│ -68- │ │ -70- │  │ -72- │
└──────┘ └──────┘  └──────┘
```

## FIG.3

```
┌──────────┐
│   -80-   │
└──────────┘
      │
      ▼
┌──────────┐
│   -82-   │
└──────────┘
      │
      ▼
┌──────────┐
│   -84-   │
└──────────┘
      │
      ▼
┌──────────┐
│   -86-   │
└──────────┘
      │
      ▼
┌──────────┐
│   -88-   │
└──────────┘
      │
      ▼
┌──────────┐
│   -90-   │
└──────────┘
      │
      ▼
┌──────────┐
│   -92-   │
└──────────┘
   ╱        ╲
  ▼          ▼
┌──────┐   ┌──────┐
│ -94- │   │ -96- │
└──────┘   └──────┘
```

## FIG.4

```
┌─────────────┐
│    -100-    │
└─────────────┘
       │
       ▼
┌─────────────┐
│    -102-    │
└─────────────┘
       │
       ▼
┌─────────────┐
│    -104-    │
└─────────────┘
       │
       ▼
┌─────────────┐
│    -106-    │
└─────────────┘
       │
       ▼
┌─────────────┐
│    -108-    │
└─────────────┘
       │
       ▼
┌─────────────┐
│    -110-    │
└─────────────┘
       │
       ▼
┌─────────────┐
│    -112-    │
└─────────────┘
```

## FIG.5

Europäisches
Patentamt

European
Patent Office

Office européen
des brevets

**RAPPORT DE RECHERCHE EUROPEENNE**

Numéro de la demande

EP 20 16 1471

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/226504 A1 (DE LA IGLESIA ERIK [US] ET AL) 27 septembre 2007 (2007-09-27) * abrégé * * alinéa [0051] - alinéa [0069] * * alinéa [0078] - alinéa [0079] * * alinéa [0089] - alinéa [0106] * * alinéa [0127] * * alinéa [0133] - alinéa [0134] * * figures 7, 8, 9, 12, 14, 15 * ----- | 1-14 | INV. G06F21/32 G06F21/64 H04L9/32 H04L29/06 |
| A | WO 2017/136879 A1 (MOLONEY LINDSAY [AU]; SCOTT GUY [AT]) 17 août 2017 (2017-08-17) * le document en entier * ----- | 1-14 | |
| A | US 2012/203670 A1 (PIERSOL KURT W [US]) 9 août 2012 (2012-08-09) * le document en entier * ----- | 1-14 | |

DOMAINES TECHNIQUES RECHERCHES (IPC)

G06F
H04L

Le présent rapport a été établi pour toutes les revendications

| Lieu de la recherche | Date d'achèvement de la recherche | Examinateur |
|---|---|---|
| Munich | 27 mars 2020 | Bae, Jun-Young |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.............................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 16 1471

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2020

| Document brevet cité au rapport de recherche | Date de publication | Membre(s) de la famille de brevet(s) | Date de publication |
|---|---|---|---|
| US 2007226504 A1 | 27-09-2007 | AUCUN | |
| WO 2017136879 A1 | 17-08-2017 | AU 2017218452 A1 | 19-07-2018 |
| | | BR 112018016212 A2 | 18-12-2018 |
| | | CA 3012870 A1 | 17-08-2017 |
| | | CL 2018002135 A1 | 07-12-2018 |
| | | CN 109075971 A | 21-12-2018 |
| | | CO 2018009397 A2 | 20-09-2018 |
| | | CR 20180435 A | 21-01-2019 |
| | | CU 20180085 A7 | 04-10-2018 |
| | | EA 201891795 A1 | 31-01-2019 |
| | | EC SP18067575 A | 31-10-2018 |
| | | EP 3414867 A1 | 19-12-2018 |
| | | JP 2019511758 A | 25-04-2019 |
| | | KR 20180110670 A | 10-10-2018 |
| | | NI 201800081 A | 18-02-2019 |
| | | PH 12018501569 A1 | 21-01-2019 |
| | | SG 11201805566X A | 30-08-2018 |
| | | SV 2018005732 A | 04-04-2019 |
| | | US 2019044727 A1 | 07-02-2019 |
| | | WO 2017136879 A1 | 17-08-2017 |
| | | ZA 201804492 B | 29-05-2019 |
| US 2012203670 A1 | 09-08-2012 | AU 2012211684 A1 | 22-08-2013 |
| | | CN 103339636 A | 02-10-2013 |
| | | EP 2671187 A1 | 11-12-2013 |
| | | JP 5971254 B2 | 17-08-2016 |
| | | JP 2014510318 A | 24-04-2014 |
| | | KR 20130114710 A | 17-10-2013 |
| | | SG 192233 A1 | 30-09-2013 |
| | | US 2012203670 A1 | 09-08-2012 |
| | | WO 2012105666 A1 | 09-08-2012 |

EPO FORM P0460

Pour tout renseignement concernant cette annexe : voir Journal Officiel de l'Office européen des brevets, No.12/82